(19) Europäisches Patentamt
European Patent Office
Office européen des brevets

(11) EP 0 874 474 A2

# (12) EUROPEAN PATENT APPLICATION

(43) Date of publication:
28.10.1998 Bulletin 1998/44

(51) Int. Cl.⁶: H04B 7/02

(21) Application number: 98107172.3

(22) Date of filing: 20.04.1998

(84) Designated Contracting States:
AT BE CH CY DE DK ES FI FR GB GR IE IT LI LU MC NL PT SE
Designated Extension States:
AL LT LV MK RO SI

(30) Priority: 21.04.1997 US 845227

(71) Applicant: MOTOROLA, INC.
Schaumburg, IL 60196 (US)

(72) Inventors:
• Jackson, Irvin Riley, Jr. II
Schaumburg, Illinois 60195 (US)

• Bieker, John
Gilbert, Arizona 85234 (US)
• Torkkola, Kari Erkki Juhani
Chandler, Arizona 85226 (US)

(74) Representative:
Morgan, Marc et al
Motorola European Intellectual Property
Operations,
Midpoint,
Alencon Link
Basingstoke, Hampshire RG21 7PL (GB)

## (54) Communication system and method for recovery signals utilizing separation techniques

(57) A communication system (100) includes a first receiver device (110) that receives a first mixture of a first signal from a first transmitter (150) and a second signal from a second transmitter (160). A second receiver device (130) receives a second mixture of the first signal from the first transmitter (150) and the second signal from the second transmitter (160). A processing unit (140) configured to receive the first and second mixture recovers the respective original first and second transmitted signals. A method of recovering assigns a first channel to a first transmitter (150) and to a second transmitter (160). The method also receives a first and second mixture of signals from the first and second transmitters at a first receiving device (110) and receives a second mixture of signal from the first and second transmitters at a second receiving device (130). The method further processes the first and second mixed signals to recover the original signal of the second transmitter (160).

FIG. 2

EP 0 874 474 A2

**Description**

FIELD OF THE INVENTION

The present invention relates generally to communications systems. More particularly, the present invention relates to subscriber units, wireless communication systems, and methods for increasing radio frequency (RF) spectrum reuse utilizing separation techniques.

BACKGROUND OF THE INVENTION

Conventional wireless communication systems utilize RF channels having pre-assigned frequencies to exchange information between base stations and remote subscriber units. Each base station transmits and receives signals over the RF channels throughout a geographic area to provide service to the subscriber units. In a cellular type wireless system, the geographic service area of the base stations is usually divided into a group of cells. Within each cell, a set of RF channels is allocated to each base station to allow communication between the base stations and the subscriber units. U.S. Patent No. 5,506,867 entitled "Cellular Radio System Using Common Radio Backbone," assigned to the assignee of the present application, which is herein incorporated by reference, discloses an arrangement of cells in a wireless communication system.

Because the frequency spectrum allocated for wireless communication systems is limited, the RF channels are typically reused by other base stations in cells that are geographically separated. For example, the base stations of adjoining cells usually operate on different sets of RF channels, and the base stations of cells that are sufficiently spaced apart may operate on the same set of RF channels. However, reusing the RF channels may result in some subscriber units accessing a remote base station operating on the same or a similar set of RF channels as are assigned to a cell station in which the subscriber units are located.

In certain geographic areas, the frequency spectrum for cellular systems is becoming increasingly occupied and used. In these areas, the base stations can be operating at maximum capacity where all assigned RF channels are being utilized. As a result, calls from subscriber units may be rejected by the base stations, and the subscriber units may have to initiate calls numerous times before securing an available RF channel from a base station.

In order to increase the capacity of wireless communication systems, more RF channels may be added to existing base stations. Alternatively, or in addition to, existing cells may be divided into smaller cells or new cells may be added to increase capacity. However, the number of RF channels that may be added to the base stations is limited to the specific RF channels allocated by the Federal Commerce Commission (FCC). In addition, due to hardware or space limitations, the base stations are restricted to the maximum number of RF channels which the base stations can accommodate. Furthermore, subdividing existing cells and adding new cells is often quite costly because of required user handset modifications to the existing units.

Accordingly, there is a need for improved devices, systems, and methods for increasing the subscriber capacity of wireless communication systems. It would also be desirable to provide devices and methods that can expand the RF spectrum capacity of wireless communication systems without allocating additional RF channels, adding new cells, or subdividing existing cells. It would further be beneficial to provide devices and methods that can reduce adjacent site co-channel interference in wireless communication systems.

BRIEF DESCRIPTION OF THE DRAWINGS

The invention itself, together with further features and attendant advantages, will become apparent from consideration of the following detailed description, taken in conjunction with the accompanying drawings in which:

FIG. 1 is a diagrammatical view of a wireless communication system having an overlapping reception coverage area to allow a plurality of receiver units to receive signals from a plurality of remote subscriber units over the same RF channel;
FIG. 2 is a diagrammatical view of a wireless communication network;
FIG. 3 is a block diagram of a receiver unit of FIG. 1;
FIG. 4 is a diagrammatical view of another wireless communication system including a plurality of receiver units having an overlapping reception coverage area;
FIG. 5 is a diagrammatical view of another wireless communication system including a plurality of receiver units having an overlapping reception coverage area;
FIG. 6 is a diagrammatical view illustrating a subscriber unit moving through a wireless communication system;
FIG. 7 is a diagrammatical view of a subscriber unit receiving signals from a plurality of receiver units;
FIG. 8 is a diagrammatical view of a handset of the subscriber unit of FIG. 7;

FIG. 9 is a block diagram of a blind source separation process;

FIG. 10 is a schematic diagram of one embodiment of the blind source separation process of FIG. 9; and

FIG. 11 is a schematic diagram of another embodiment of the blind source separation process of FIG. 9.

## DETAILED DESCRIPTION OF THE PREFERRED EMBODIMENTS

For the purposes of promoting an understanding of the principles in accordance with the invention, reference will now be made to the embodiments illustrated in the drawings and specific language will be used to describe the same. It will nevertheless be understood that no limitation of the scope of the invention is thereby intended. Any alterations and further modifications of the illustrated embodiments, and any additional applications of the principles of the invention as illustrated herein, which are equivalent or would normally occur to one skilled in the relevant art, are to be considered within the scope of the invention claimed.

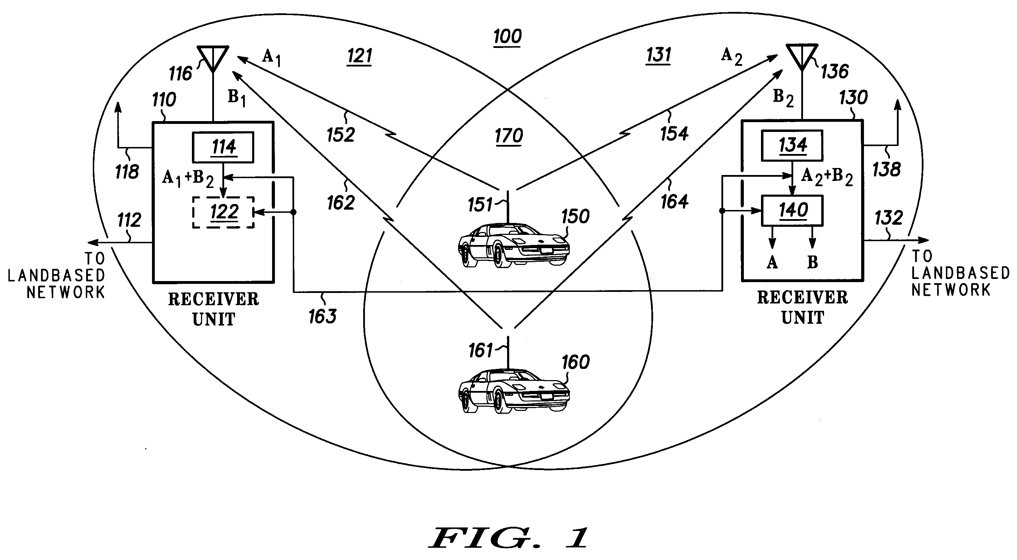

Referring now to the drawings, FIG. 1 illustrates a wireless communication system 100 including two cellular coverage regions 121 and 131 that have an overlapping reception coverage area 170. The overlapping coverage area 170 enables a plurality of spaced apart receiver units (RU) 110 and 130 to receive signals from a plurality of remote subscriber units 150 and 160 over the same RF channel (i.e., the same frequency and time slot in a digital system). Each receiver unit 110 and 130 receives a different mixture of the signals over the same RF channel from the subscriber units 150 and 160. The mixtures received by the receiver units 110 and 130 are processed to recover the respective original signals transmitted by each subscriber unit 150 and 160.

The wireless communication system 100 may be utilized to increase the RF channel capacity in cellular systems, micro-cellular systems, pico-cellular systems, as well as other broadcast systems, such as radio systems, satellite networks and television systems. The wireless communication system 100 may be an analog system, such as a frequency division multiple access (FDMA) system, or a digital system, such as time division multiple access (TDMA) system or a code system, such as a division multiple access (CDMA) system.

The wireless communication system 100 can reduce the amount of RF spectrum used or needed, and increase the RF spectrum capacity without allocating addition RF channels, adding new cell installations, or subdividing existing cells. The system 100 allows multiple users of an RF spectrum to simultaneously utilize the same frequency. In addition, the wireless communication system 100 further reduces adjacent site co-channel interference by permitting complete or partial overlapping of the center frequency of adjacent signals of the RF channels. For example, three adjacent signals having a spacing of 16.67 kHz between center frequencies can be arranged over two adjacent RF channels. The center frequencies may be separated by 1% to 99% of single channel band width.

As shown in FIG. 1, the receiver units 110 and 130 have an overlapping or common reception coverage area 171 for receiving signals from the subscriber units 150 and 160. The receiver units 110 and 130 can receive signals from the subscriber units 150 and 160 over the same RF channel having partially or completely overlapping center frequencies.

Each subscriber unit 150 and 160 includes one or more antennas 151 and 161, respectively, to transmit and receive signals from the receiver units 110 and 130. The subscriber units 150 and 160 may comprise, for example, mobile units, hardwired units, radio units, hand held phones, vehicle mounted units, or any other suitable voice, video, or data transmitting or receiving devices.

The receiver unit 110 of the wireless communication system 100 communicates with a land-line network over transmission line 112, and the receiver unit 130 communicates with a land-line network over transmission line 132. Each receiver unit 110 and 130 may include at least one duplex signaling or control channel and a plurality of duplex voice channels. The receiver units 110 and 130 may handle call establishment, disconnect, and handoff procedures in a respective coverage area. The receiver units 110 and 130 may also store information relating to the subscriber units requesting voice channels, the subscriber units assigned to voice channels, the subscriber units directed to collocated receiver units, mobile subscriber identification, and other selected information. The receiver units 110 and 130 continuously monitor the signals received from subscriber units engaged in calls, checking on signal strength and quality.

The receiver unit 110 of the wireless communication system 100 includes one or more receivers 114 (one being shown), one or more receiver antennas 116 (one being shown) for receiving signals from the subscriber units, one or more transmitter antennas 118 (one being shown) to transmit signals to subscriber units, and provides service to the reception coverage area 121. The receiver unit 110 may communicate with or receive information, such as, for example, data, video, voice, etc., over one or more RF channels having pre-assigned frequencies. The receiver unit 110 may also have a processing unit 122 as further described below. It is contemplated that the receiver unit 110 may, for example, comprise a base transceiver unit, a base station control, a base station system, or any other suitable receiver station.

The receiver 114 of the receiver unit 110 is coupled to the receiver antenna 116 to receive signals over at least one of the RF channels from subscriber units its reception coverage area 121. As shown in FIG. 1, the receiver antenna 116 receives a signal $A_1$ over a communication path 152 from the subscriber 150 and also receives a signal $B_1$ over communication path 162 from subscriber unit 160. The mixture of the signals $A_1$ and $B_1$ received by the receiver unit 110 depends on the reception characteristics of the antenna and the direction of arrival of the signal at the antenna. The mixture of the signals can be controlled by the placement and direction of the antenna and the amount of RF power generated at the subscriber unit.

The receiver 114 receives the mixture of the signals $A_1$ and $B_1$ from the receiver antenna 116 and sends a representation of the mixture over a communication link 163, such as, for example, a back haul, to the receiver unit 130. The communication link 163 may be a one-way or a bi-directional commercial link and is preferably a high speed (i.e., 2.048 mb/s) transmission link, such as wireline, coaxial cable, fiber optic line, or microwave line.

The receiver unit 130 of the wireless communication system 100 includes one or more receivers 134 (one being shown), one or more receiver antennas 136 (one being shown) for receiving signals from the subscriber units, one or more transmitter antennas 138 (one being shown) to transmit signals to the subscriber units, a processing unit 140, and provides service to the reception coverage area 131. The receiver unit 130 may communicate with or receive information, such as, for example, data, voice, video, etc., over one or more RF channels having pre-assigned frequencies. One or more of the RF channels of the receiver unit 130 preferably may be the same RF channels allocated to the receiver unit 110, and the reception coverage area 131 of the receiver unit 130 overlaps the reception coverage area 121 of the receiver unit 110. It is contemplated that the receiver unit 130 may, for example, comprise a base transceiver station, a base station control, a base station system, or any other suitable receiver unit.

The receiver 134 of the receiver unit 130 is coupled to the antenna 136 for receiving signals over one of the RF channels from the subscriber units that are in the reception coverage area 131. As shown in FIG. 1, the receiver unit 130 receives a signal $A_2$ over a communication path 154 from the mobile subscriber 150 and also receives a signal $B_2$ over communication path 164 from mobile subscriber unit 160. The mixture of signals $A_2$ and $B_2$ received by the receiver unit 130 depends upon the reception characteristics of the antenna and the direction of arrival of the respective signals at the antenna. The mixture of the signals can be controlled to some extent by the placement and orientation of the antenna and the amount of RF power generated at the subscriber unit.

The receiver 134 of the receiver unit 130 receives the mixture of the signals $A_2$ and $B_2$ from the receiver antenna 136 and transmits the signals to the processing unit 140. It is also contemplated that the receiver 134 may transmit the mixture to the processing unit 140 of the receiver unit 110 over the back haul for processing as further described below.

The processing unit 140 of the receiver unit 130 receives the mixture of signals $A_1$ and $B_1$ from the receiver 114 of the receiver unit 110 and the signal $A_2$ and $B_2$ from the receiver 134 of the receiver unit 130. The processing unit 122 separates the two mixtures to recover the original signals A and B of the subscriber units 150 and 160, as will be further discussed below. The processing unit 122 is capable of separating mixtures of signals that have delays and that include a sum of multi-path copies of the signals distorted by the environment. Patent Application Serial No. 08/571,329, filed on December 12, 1995, entitled "Methods And Apparatus For Blind Separation Of Delay And Filter Sources", assigned to the assignee of the present application, which is herein incorporated by reference, discloses methods for separating multiple sources by blind source separation.

The processing unit 140 that recovers the original signals of the subscriber units may be incorporated into the receiver unit 110, the receiver unit 130, or may be incorporated at any suitable site or location, such as, for example, a base station controller, a base transceiver station, a base station system, or a mobile switching center. It is also contemplated that the processing unit 140 may receive mixtures from any suitable number of receivers. It will be recognized that the capacity of existing wireless communication systems 100 can be expanded by increasing the gain of the antennas of the existing receiver units to provide an overlapping reception area to receive different mixtures of signals from subscriber units in the overlapping coverage area and to separate the different mixtures into their original signals. For example and without limitation, signals from "n" subscriber units can be processed and separated into "n" original signals where there are "n" overlapping coverage regions as described below.

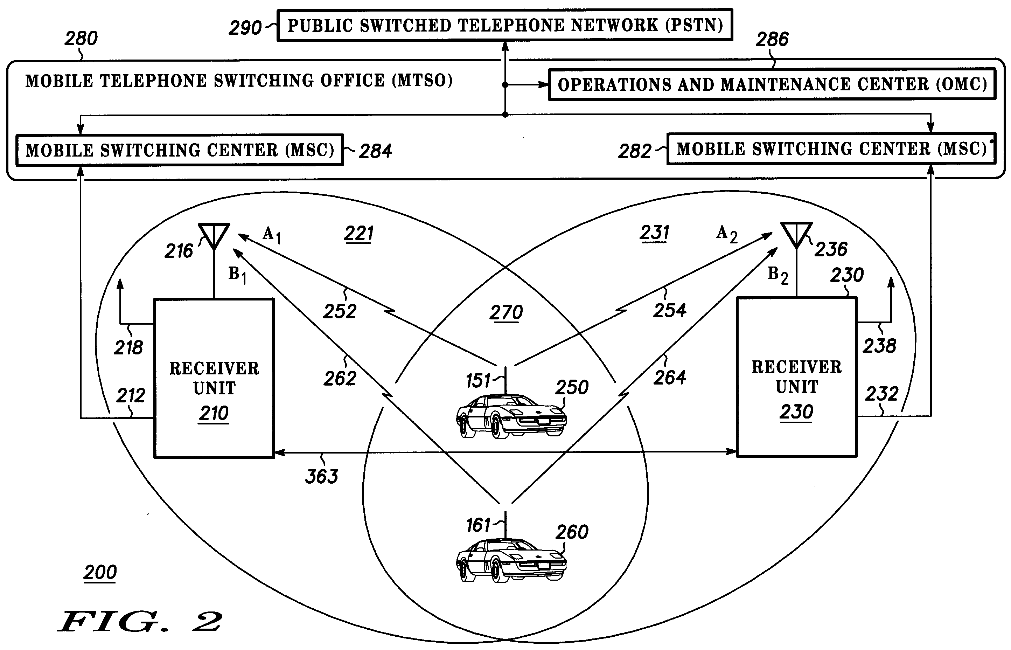

Referring now to FIG. 2, a network 200 of a communication system is illustrated. The network 200 includes a wireless communication system, which in many respects corresponds in construction and function to the previously described wireless communication system 100 of FIG. 1. Components of the present wireless communication system which generally correspond to these components of the wireless communication system 100 are designated by like reference numerals in the two-hundred series.

As shown in FIG. 2, the network 200 includes one or more mobile telephone switching offices (MTSO) 280, receiver units 210 and 230, and subscriber units 250 and 260. The mobile telephone switching offices 280 include one or more mobile switching centers (MSC) 282 and 284 in communication with an operations and maintenance center (OMC) 286 and the receiver units 230 and 240. The mobile telephone switching office 280 may include a subscriber data base which includes subscriber identification and billing information. The mobile telephone switching office 280 is also interconnected with a terrestrial telephony carrier, such as the public switched telephone network (PSTN) 290. The PSTN 290 provides communication paths to a plurality of land-line telephones and may also communicate with satellite systems and other mobile switching centers.

The receiver unit 210 of the wireless communication system 200 communicates with the MSC 284 over a transmission line 212, and the receiver unit 230 communicates with the MSC 282 over a transmission line 232. The receiver units 210 and 230 transmit and receive signals from the subscriber units 250 and 260 as described above.

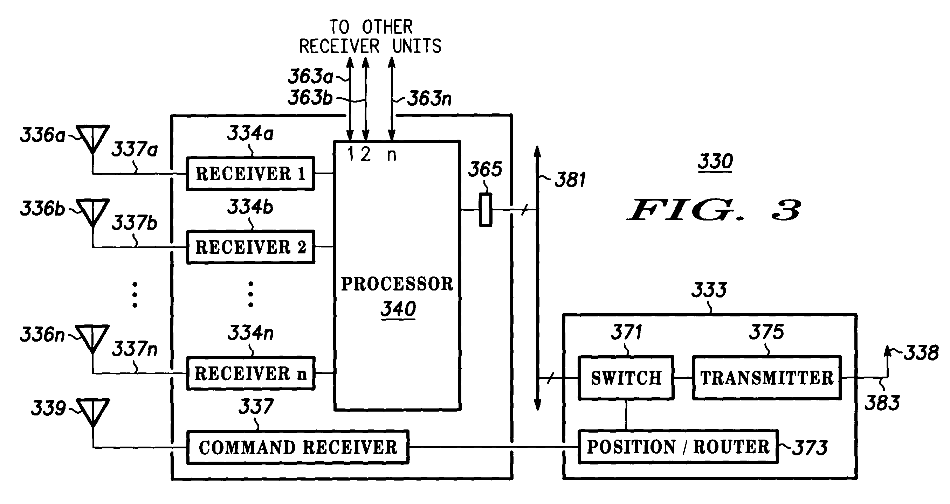

Referring now to FIG. 3, a block diagram of a preferred component layout for a receiver unit 330 is illustrated. The receiver unit corresponds in many respects to the construction and function of the previously described receiver unit 130. Components of the receiver unit 330 which generally correspond to the components of the receiver unit 130 are designated by like reference numerals in the three-hundred series.

The receiver unit 330 includes an uplink 331 and a downlink 333 to communicate with the subscriber units. It is contemplated that the receiver unit 330 may comprise, for example, a base transceiver station, a base station controller, a base station system, or any other suitable receiving station.

The uplink 331 of the receiver unit 330 provides a communication path from a subscriber unit to the receiver unit 330 over a first frequency of a RF channel while the downlink 333 provides a communication path from the receiver unit 330 to a subscriber unit over a second frequency of the RF channel. The uplink 331 generally includes a plurality of receivers 334a,334b...334n for receiving information over selected traffic channels, a command receiver 337 for receiving at least one duplex paging/access channel, a processing unit 340, and a detection module 365.

The receivers 334a,334b...334n of the uplink 331 receive signals from a plurality of receiver antennas 336a,336b...336n over transmission lines 337a,337b...337n. The receivers 334a,334b...334n may be an analog channel units, dual mode channel units, or digital channel units. The receivers 334a,334b...334n tune to an incoming RF channel to receive signals from the subscriber units. The receivers 334a,334b...334n also transmit signals to the processing unit 340. The receivers 334a,334b...334n further monitor the strength of the RF channels received from the subscriber units.

Each receiver 334a,334b...334n of the uplink 331 includes a plurality of communication channels. These communication channels may be analog control channels, analog traffic channels, digital control channels, digital traffic channels, analog scanning receiver channels, or digital scanning receiver channels. Each communication channel of the receiver unit 330 is associated with a specific RF channel having a predefined center frequency used for RF transmissions. The allocation of frequencies to communication channels, for example, is defined by U.S. Cellular Standard IS-54.

The processing unit 340 of the uplink 331 is in communication with each of the receiver units 334a,334b...334n. The processing unit 340 includes a blind source separation routine, as further described below, that recovers the original signals of "n" subscriber units from different mixtures of the signals received by "n" receiver units. The processing unit 340 may be in communication with other or adjacent receiver units by one or more transmission links 363a,363b...363n to receive RF channels from the adjacent receiver units. The processing unit 340 is also in communication with a detector module 365 that determines whether the recovered signals of the subscriber units are noise. The detector module 365 may be any suitable device that can detect noise. If the detector module 365 detects a noise only signal, the separated signal will not be sent the mobile switching center.

The processing unit 340 of the uplink 331 may be a microprocessor, such as, for example, a Motorola VeComp parallel digital signal processor (DSP). The processing unit 340 may be commanded with a multi-tasking software operating system, such as UNIX® or NT® Operating System available from Microsoft. The processing unit 340 may also be programmed with application software and communication software. The software can be written in C language or another conventional high level programming language.

The command receiver 337 of the uplink 331 is in communication with a position router of the downlink 333. The command receiver 337 is also in communication with a command receiver antenna 339. The command receiver 337 may perform call setup and channel assignment for the subscriber units.

The downlink 333 of the receiver unit 330 generally includes a switch 371, a position/router 373, a transmitter (Tx) 375, and one or more transmitter antennas 338 (one being shown). The switch 371 of the downlink 333 is preferably in communication with a mobile switching center via transmission line 381. The switch 371 includes multiplex circuitry to send signals received from the mobile switching center to the transmitter 375 of the downlink 333.

The transmitter 375 transmits signals to the transmitter antennas 338 on a selected RF channel via a communication line 383. The transmitter 375 may include a microprocessor along with circuitry for transmitting information over each of the RF channels. The position/router 373 selects one of the transmitter antennas 338 to be used to transmit signals or information to the subscriber units. The transmitter antennas 338 are preferably multi-element antenna arrays that can spatially direct the signal to the subscriber units. By spatially directing the signals, the capacity of the downlink can be expanded.

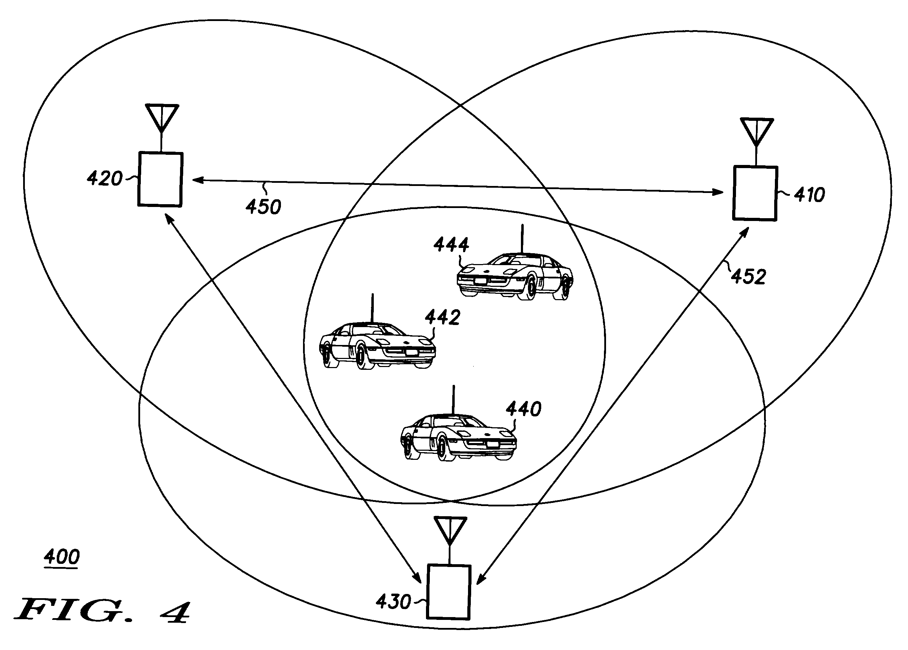

Referring now to FIG. 4, a diagrammatical view of another wireless communication system 400 including a plurality of receiver units having an overlapping reception coverage area is illustrated. The overlapping area of the receiver units allows the receiver units to receive signals from a plurality of subscriber units over the same RF channel having partially or completely overlapping center frequencies.

The wireless communication system 400 includes a processing receiver unit 410, and one or more non-processing receiver units 420 and 430. The processing receiver unit 410 may be similar in many respects to the construction and function of the previously described receiver unit 330 and the non-processing units 420 and 430 may be similar in many respects to the construction and function of the previously described receiver unit 110. It is contemplated that the receiver units 410, 420 and 430 may comprise, for example, a base transceiver station, a base station controller, a base station system, or any other suitable receiver station. It will also be recognized that the wireless communication system 400 may have any suitable number of processing receiver units and non-processing receiver units depending upon the layout of the wireless communication system.

When mobile subscriber units 440, 442 and 444 are activated, the subscriber units 440, 442 and 444 scan a set of frequencies in search of a channel identification signal transmitted by the receiver units 410, 420 and 430. Upon detecting a channel identification signal from the receiver units 410, 420 and 430, the subscriber units 440, 442 and 444 measure the signal strength or quality of the identification signal to determine the relative proximity of each receiver unit 410, 420 and 430. The subscriber units 440, 442 and 444 then determine the strongest identification signal from the receiver unit 410, 420 and 430 and select a serving receiver unit. After selecting a serving receiver unit, the subscriber units 440, 442 and 444 tune to one of the RF channels of the selected receiver unit. The subscriber units 440, 442 and 444 then monitor the selected RF channel frequency for incoming calls.

When the subscriber units 440, 442 and 444 initiate a call, the subscriber units 440, 442 and 444 transmit an access request over the control channel of the receiver unit serving the subscriber units 440, 442 and 444. The control channel may be received over a time slot within a predetermined frequency assigned to the serving receiver unit. Once the serving receiver unit receives the message from the subscriber units 440, 442 and 444, the subscriber units 440, 442 and 444 may be assigned to the same RF channel or different RF channels.

The receiver units 410, 420 and 430 determine whether each receiver unit 410, 420 and 430 is receiving a signal from each of the subscriber units 440, 442 and 444. When each receiver unit 410, 420 and 430 is receiving a signal from each of the subscriber units 440, 442 and 444, a single RF channel can be allocated for the subscriber units 440, 442 and 444. After the RF channel has been allocated for the subscriber units 440, 442 and 444, the serving receiver unit of each subscriber unit 440, 442 and 444 instructs the subscriber units 440, 442 and 444 to switch frequencies to the RF channels allocated by the receiver units 410, 420 and 430. It will also be recognized that the subscriber units 440, 442, and 444 may be assigned to the same RF channel by any suitable process.

Once the subscriber units switches to the allocated RF channel, the communication system 400 establishes a communication path from the subscriber units 440, 442 and 444 to the desired destination, depending upon whether communication with a fixed or portable telephone is desired. Thereafter, a communication channel is established, and the subscriber units 440, 442 and 444 may communicate simultaneously over the same communication channel. It will also be recognized that the subscriber units may be assigned to the same RF channel at any time. For example, the subscriber units may be all be initially assigned to different RF channels, and after determining that each of receiver units is receiving a signal from the subscriber unit, the subscriber units may be assigned to the same RF channel.

After the subscriber units 440, 442 and 444 switch to the allocated RF channel, the processing receiver unit 410 receives a first mixture of signals from the subscriber units 440, 442 and 444. The non-processing receiver unit 420 also receives a second mixture of signals from the mobile subscriber units 440, 442 and 444, and the non-processing receiver unit 430 receives a third mixture of signals from the subscriber units 440, 442 and 444. The receiver units 420 and 430 transmit the first and second mixtures over transmission lines 450 and 452, respectively, to the processing receiver unit 410. The processing receiver unit 410 processes the first, second and third mixtures and recovers the original signals of the subscriber units 440, 442 and 444. The receiver unit 410 then transmits the signals to a land-line network. It will be recognized that the mixtures may be sent, for example, to any one of the receiver units 410, 420 and 430 for processing or the mixtures may be sent to a remote processing site.

When the subscriber units 440, 442 and 444 are assigned to the same RF channel, the signal strength of the subscriber units 440, 442 and 444 is monitored. The receiver units 410, 420 and 430 continuously check signal strength and quality received from the subscriber units 440, 442 and 444. When the subscriber units 440, 442 and 444 begin to move out of the coverage area of a receiver unit in which it is in communication, the receiver unit may handoff to another receiver unit as further described below.

The subscriber units 440, 442 and 444 may also receive calls originating from a terrestrial facility, such as the public switched telephone network or another mobile switching center, by connecting the call through the network at the mobile switching center. When calls are being sent from the public switched telephone network or another mobile switching center to the subscriber units 440, 442 and 444, the mobile switching center sends a page-request-message to the receiver units 410, 420 and 430. After the receiver units 410, 420 and 430 receive the page-request-message, the receiver units 410, 420 and 430 send a page request over the RF communication link to the subscriber units 440, 442 and 444 to announce the incoming calls. The subscriber units 440, 442 and 444 respond by sending a page response message to the receiver units 410, 420 and 430. After the subscriber units 440, 442 and 444 respond to the page from the receiver units 410, 420 and 430, the receiver units 410, 420 and 430 allocate an RF channel for the subscriber units 440, 442 and 444.

Once the receiver units 410, 420 and 430 establishes a channel for the subscriber units 440, 442 and 444, the receiver units 410, 420 and 430 instruct the subscriber units 440, 442 and 444 to switch from the control frequency to a frequency corresponding to the selected RF channel. If each of the receiver units 410, 420 and 430 receives signals from the subscriber units 440, 442 and 444, the subscriber units may be assigned to the same RF channel. The outside calls are then routed to the receiver units 410, 420 and 430. The receiver units 410, 420 and 430 then connect the subscriber units 440, 442 and 444 with the outside caller.

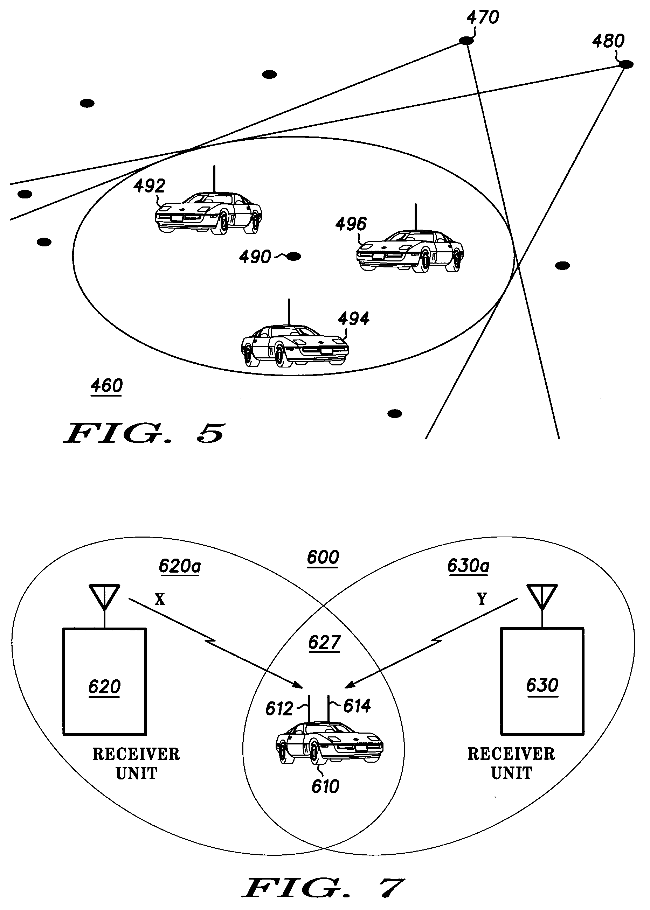

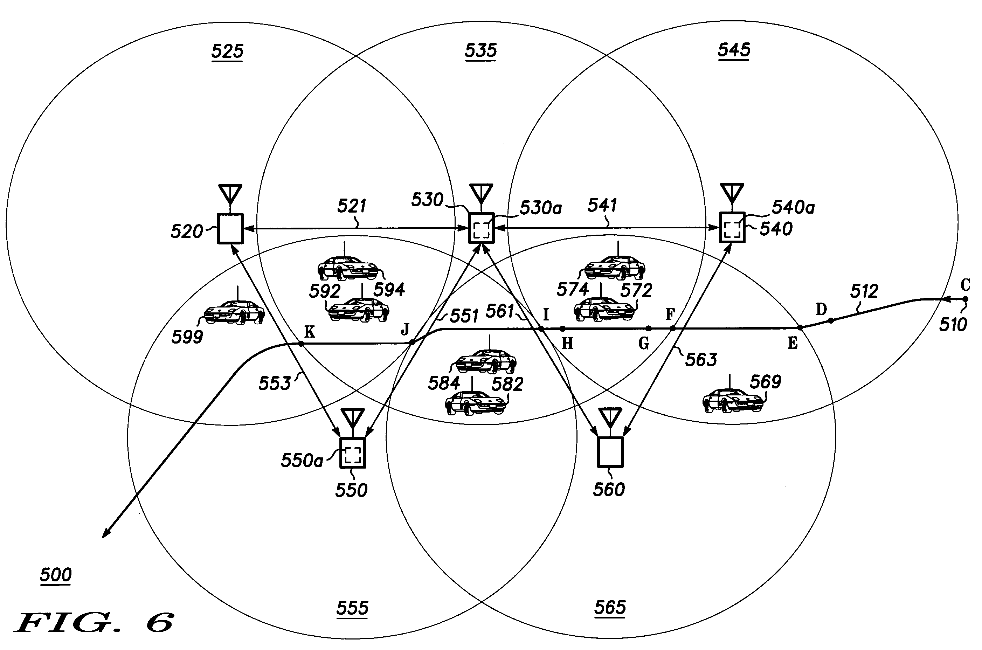

Referring now to FIG. 5, a diagrammatical view of another wireless communication system 460 including a plurality of receiver units having an overlapping coverage area is illustrated. The wireless communication system allows a plurality of receiver units 470, 480 and 490 (represented by dots on FIG. 5) to receive signals from a plurality of subscriber units 492, 494 and 496 over the same RF channel having partially or completely overlapping center frequencies. The receiver units 470, 480 and 490 may be similar in many respects to the construction and function of the previously described receiver units. It is contemplated that the receiver units may comprise, for example, base transceiver stations, base controller stations, base station systems, or any other suitable receiving station.

The receiver units 470, 480 and 490 are deployed throughout a selected geographical region. The receiver units 470, 480 and 490 include at least one receiver antenna to receive signals from the subscriber units and may have one or more transmitters to transmit signals to the subscriber units. The receiver units 470, 480 and 490 may also operate on one or more of the same RF channels.

As shown in FIG. 5, the receiver units 470 and 480 may have one or more directional antennas, and the receiver unit 490 may have one or more omni-directional antennas. The antennas of the receiver units are configured to receive different mixtures of signals from the subscriber units 492, 494 and 496. It is contemplated that the antennas of the receiver units may be arranged in any suitable configuration to provide an overlapping reception coverage area. For example, the antennas may be co-located or spaced at any suitable distance.

When the subscriber units 492, 494 and 496 are assigned to the same RF channels, each receiver unit 470, 480 and 490 preferably receives a different mixture of signals from the subscriber units 492, 494 and 496. The receiver units 470, 480 and 490 transmit the mixture of signals to a processing unit to perform a blind source separation routine, as further described below, to recover the original signals of the subscriber units. The processing unit may be incorporated into one or more of the receiver units 470, 480 and 490 or may be located at a remote site.

Although only three subscribers and three receiver units are shown in FIG. 5, it will be recognized that any suitable number of receiver units and subscriber units may be used. The maximum number of receiver units that can receive signals from subscriber units on the same channel is determined by the number of receiver units. For example, the system may be configured such that "n" receiver units receive mixed signals from "n" subscriber units.

Referring now to FIG. 6, a diagrammatic view of a subscriber unit 510 (indicated by a dot) is moving through a wireless communication system 500 along path 512. The wireless communication system 500 has a plurality of receiver units 520, 530, 540, 550 and 560. The receiver units 530, 540 and 550 preferably have processing units 530a, 540a and 550a that can recover the original signals of the subscriber units as further described below. It is contemplated that the processing unit may be located in any of the receiver units or at a remote site. Each receiver unit 520, 530, 540, 550 and 560 has a reception coverage area 525, 535, 545, 555 and 565, respectively. In one embodiment, the receiver unit 530 is connected to the receiver units 520, 540, 550 and 560 by communication links 521, 541, 551 and 561, respectively, and the receiver units 520 and 550 are connected by a communication link 553. The receiver unit 540 is also connected to the receiver unit 560 by a communication link 563. The communication links are preferably high speed transmission links, such as, for example, back hauls, as described above.

As shown in FIG. 6, the subscriber unit 510 is traveling along the path 512 in the wireless communication system 500. At point D, the subscriber unit 510 is in the coverage area 545 of the receiver unit 540, and the subscriber unit 510 may communicate with the receiver unit 540 over an RF channel. As the subscriber unit 510 passes point E, the subscriber unit 510 will also be in coverage area 565 of receiver unit 560. At this point, the subscriber unit 510 may be assigned to the same RF channel of any other subscriber unit positioned within the coverage area 545 of the receiver unit 540 and the coverage area 565 of the receiver unit 560. For example, the subscriber unit 510 may be assigned to the same RF channels as subscriber unit 569. When the subscriber unit 510 is assigned to the same RF channel as the subscriber unit 569, the processing unit 540a of the receiver unit 540 may separate the mixtures received by the receiver units 540 and 560 from the subscriber units 510 and 569, and recover the original signals of the subscriber units 510 and 569.

Once the mobile subscriber passes point F, the subscriber units 510 will be in the coverage areas 535, 545, 565 of the receiver units 530, 540 and 560, respectively. The subscriber unit 510 may be assigned to the same RF channel as one or more other subscriber units in the coverage areas 535, 545, and 565. For example, subscriber unit 572 and/or subscriber unit 573 that are in the coverage areas 535, 545, and 565 can be assigned the same RF channels as the subscriber unit 510. When the subscriber units 510, 572 and 573 are assigned to the same RF channel, the mixture received by the receiver units 530, 540 and 560 from the subscriber units may be separated by the processing unit 530a of receiver unit 530 or the processing unit 540a of receiver unit 540, and the respective original signals of the subscriber units may be received.

Once the subscriber units 510, 572 and 574 are assigned to the same RF channel, the signal strength of the subscriber units 510, 572 and 574 may be monitored to determine their location and the direction in which they are moving. Preferably, a filter, such as, for example, a Kalman filter, may be used to determine the movement of the subscriber units 510, 572 and 574, through the coverage areas of the system based upon signal strength. For example, at point G, the subscriber units 510, 572 and 574 may, for example, have the following signal strengths at each receiver unit 530, 540 and 560.

TABLE A

|  | Subscriber Unit 510 | Subscriber Unit 572 | Subscriber Unit 574 |
|---|---|---|---|
| Receiver Unit 530 | .1 | .7 | .2 |
| Receiver Unit 540 | .4 | .4 | .8 |
| Receiver Unit 560 | .6 | .3 | .2 |

When the subscriber unit 510 moves to point H and the subscriber units 572 and 574 remaining stationary, the signal strengths of the subscriber units at each receiver unit are as follows:

TABLE B

|  | Subscriber Unit 510 | Subscriber Unit 572 | Subscriber Unit 574 |
|---|---|---|---|
| Receiver Unit 530 | .4 | .7 | .2 |
| Receiver Unit 540 | .1 | .4 | .8 |
| Receiver Unit 560 | .6 | .3 | .2 |

By comparing the two tables, it can be determined that the subscriber unit 510 is moving closer to the receiver unit 530 (i.e., .1 (Table A, col. 1, row 1) to .4 (Table B, col. 1, row 1)), and the subscriber unit 510 is moving away from the receiver unit 540 (i.e., .4 (Table A, col. 1, row 2) to .1 (Table B, col. 1, row 2)). The subscriber unit 510 is staying at about a substantially constant distance from the receiver unit 560 (i.e., .6 (Table A, col. 1, row 3) to .6 (Table B, col. 1, row 3)). By monitoring these coefficients, the system can determine when to handoff the subscriber unit 510 to another receiver unit. For example, the processing unit 540a can determine that the subscriber unit 510 is moving away from receiver unit 540 and can prepare a soft or a hard handoff to another receiver unit.

As the subscriber unit 510 passes point I, the subscriber unit 510 is in the coverage areas 535, 555 and 565 of the receiver units 530, 550 and 560. The subscriber unit 510 may be assigned to the same RF channel as the one or more other subscriber units in the coverage areas 535, 555 and 565. For example, the subscriber unit 510 may be assigned to the same RF channel as the subscriber unit 582 and/or subscriber unit 584 that are both positioned within the coverage areas 535, 555 and 565. When the subscriber units 510, 582 and 584 are assigned to the same RF channel, the mixture received by the receiver units 530, 550 and 560 may be separated by the processing unit 530a of receiver unit 530 or the processing unit 550a of the receiving unit 550, and the respective original signals of the subscriber units may be recovered.

Once the subscriber unit 510 passes point J, the subscriber unit 510 is in the coverage areas 525, 535 and 555 of the receiver units 520, 530 and 550. The subscriber unit 510 may be assigned to the same RF channel as one or more other subscriber units. For example, the subscriber unit 510 may be assigned to the same RF channel as the subscriber unit 592 and/or the subscriber unit 594 that are both positioned within coverage areas 525, 535 and 555. When the subscriber units 510, 592, and 594 are assigned to the same RF channel, the mixture received by the receiver units 520, 530 and 550 may be separated by the processing unit 530a of receiver unit 530 or the processing unit 550a of receiver unit 550, and the respective original signals of the subscriber unit can be recovered. After the subscriber unit 510 passes point K, the subscriber unit 510 may be assigned to the same RF channel as subscriber unit 599 as described above.

Referring now to FIGS. 7-8, a diagrammatical view of a subscriber unit 610 receiving signals from a plurality of receiver units 620 and 630 is illustrated. The receiver units 620 and 630 have coverage areas 620a and 630b, respectively, and have an overlapping region 627. The subscriber unit 610 separates signals received from the receiver units 620 and 630 and recovers their original signals. The receiver units 620 and 630 are similar in many respects to the construction and function of the receiver unit 110 described above.

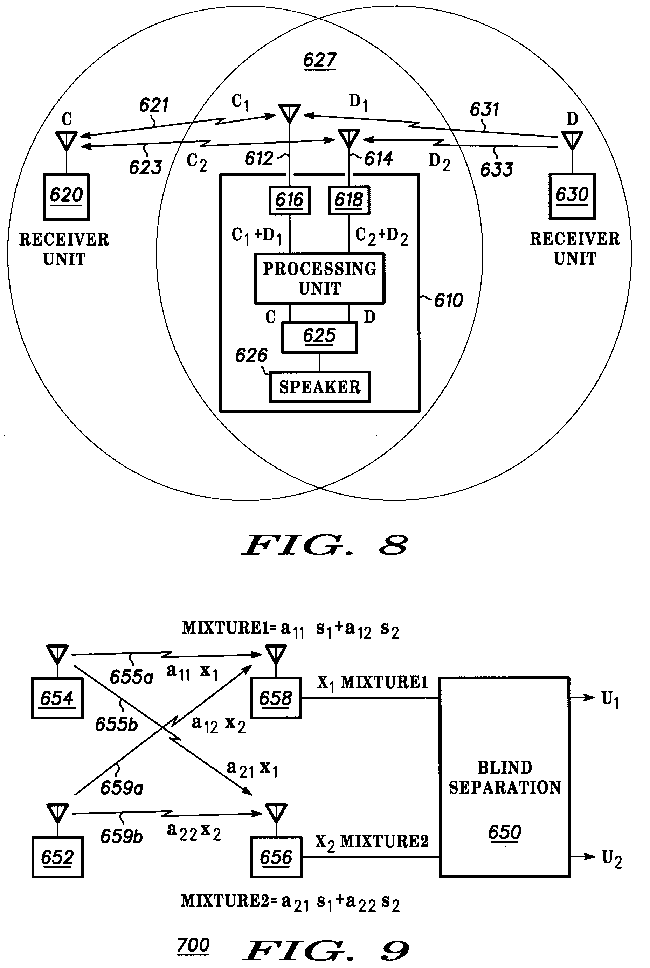

As shown in FIG. 8, the subscriber unit 610 includes directional receiver antennas 612 and 614 that are arranged in different directions, receivers 616 and 618, a processing unit 622, a transmitting antenna 624, a detection unit 625, and a speaker.

The receivers 616 and 618 of the subscriber unit 610 are coupled to the receiver antennas 612 and 614 for receiving signals over one of the RF channels from the receiver units 620 and 630. As shown in FIGS. 7 and 8, the receiver antenna 612 receives a signal $C_1$ over a communication path 621 or RF channel from the receiver unit 620 and also receives a signal $D_1$ over communication path 631 or RF channel from the receiver unit 630. The receiver 616 receives the mixture of the signals $C_1$ and $D_1$ from the receiver antenna 612 over the RF channel and sends the mixture to the processing unit 622 as further described below.

The receiver antenna 614 receives a signal C over a communication path 623 or an RF channel from the receiver unit 620 and also receives a signal $D_2$ over a communication path 633 or an RF channel from receiver unit 630. The receiver 618 receives the mixture of the signals $C_2$ and $D_2$ from the receiver antenna 614 and sends the mixture to the processing unit 622.

The processing unit 622 of the subscriber unit 610 receives the mixture of signals $C_1 + D_1$ from the receiver 616 and the signal $C_2 + D_2$ from the receiver 618 of the subscriber unit 610. The processing unit 622 separates the two mixtures to recover the original signals C and D of the receiver units 620 and 630 as will be further discussed below.

Referring now to FIGS. 9, a block diagram of a blind source separation system 700 carried out by the processing unit as described above is illustrated. The blind source separation process 700 separates the mixed signals received by a subscriber unit or a receiver unit into the original signals of the transmitter units.

As shown in FIG. 9, the blind source separation system includes a blind separation unit 650, transmitters 652 and 654, receiver devices 656 and 658. Although only two mixtures of signals of the transmitters 652 and 658 are shown, it will be recognized that the blind source separation system can be utilized for any suitable number of transmitters and their mixtures. The blind separation unit 650 may be incorporated into one of the receiver devices or may be positioned at a remote site.

The receiver device 656 receives a signal $a_{21}s_1$ (where "a" is represents some unknown amplitude) over a communication path 655b or an RF channel from the transmitter 654 and also receives a signal $a_{22}s_2$ over communication path 659b from transmitter 652. The receiver device 658 receives a signal $a_{11}s_1$ over a communication path 655a from the transmitter 654 and also receives a signal $a_{12}s_2$ over communication path 659a from transmitter 652.

The blind separation unit 650 receives the signal $a_{21}s_1 + a_{22}s_2$ from the receiver device 656 and receives the signal $a_{11}s_1 + a_{12}s_2$ from the receiver device 656. The blind separation unit 650 only has access to the two input signals and separates then into the original signals $u_1$ and $u_2$ as further described below.

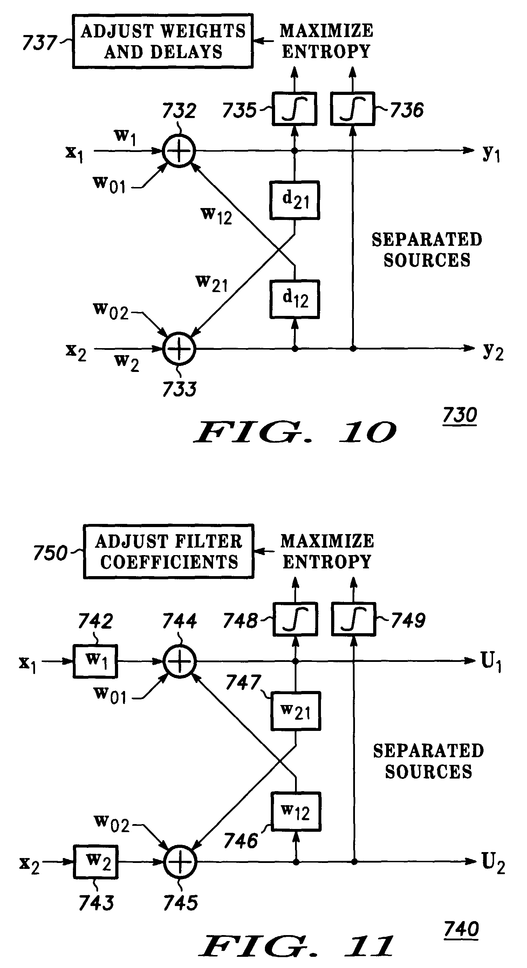

Referring now to FIG. 10, a schematic diagram of one embodiment blind source separation system 730 is illustrated. It will be recognized that any suitable algorithm may be utilized. As shown in FIG. 11, mixed signals $x_1$ and $x_2$ received by the receiver devices from the transmitters are applied to a blind separation process. The blind source separation process separates the signals into the original signals $u_1$ and $u_2$.

The first mixed signal $x_1$ is multiplied by an adaptive weight $w_1$ to produce a product signal which is applied to a summation circuit 732. Also, the second mixed signal $x_2$ is multiplied by an adaptive weight $w_2$ to produce a product signal which is applied to a summation circuit 733. Bias weights $w_{01}$ and $w_{02}$ are also applied to summation circuits 732 and 733, respectively, although in some special instances these signals may be ignored or built into the other components.

The output signals of summation circuits 732 and 733 are approximation signals $u_1$ and $u_2$, respectively, which are utilized to generate filtered feedback signals that are then applied to the summation circuits 732 and 733, respectively. In this specific embodiment, a first filtered feedback signal is generated by delaying the approximation signal $u_2$ by a delay $d_{12}$ and multiplying the delayed signal by a weight $w_{12}$. The first filtered feedback signal is applied to the summation circuit 732. Similarly, a second filtered feedback signal is generated by delaying the approximation signal $u_1$ by a delay $d_{21}$ and multiplying the delayed signal by a weight $w_{21}$. The second filtered feedback signal is applied to the summation circuit 733.

The approximation signals $u_1$ and $u_2$ are also applied to output circuits 735 and 736, which pass them through a sigmoid function, to produce output signals $y_1$ and $y_2$. The output signals are utilized in an adjustment circuit 737 to adjust the adaptive weight $w_1$, the first filtered feedback signal, the adaptive weight $w_2$, the second filtered feedback signal, and the feedback weights and the delays to maximize entropy of the output signals $y_1$ and $y_2$ and, thereby, recover the first transmitter signal as the $u_1$ and the second transmitter signal as the $u_2$.

The system 730 thus computes the following, where $u_i$ are the outputs before the nonlinearities, and $w_{0i}$ are the bias weights:

$$u_1(t) = w_1 x_1(t) + w_{12} u_2(t - d_{12}) + w_{01}$$

$$u_2(t) = w_2 x_2(t) + w_{21} u_1(t - d_{21}) + w_{02}$$

$$y_1(t) = g(u_1(t))$$

$$y_2(t) = g(u_2(t))$$

where g is the logistic function $g(u) = (1/1+e^{-u})$, and g is also referred to as a sigmoid function.

The mutual information between the outputs $y_1$ and $y_2$ is minimized by maximizing the entropy at the outputs, which is equal to maximizing E[ln|J|]. The determinant of the Jacobian of the network is now

$$|J| = \frac{\partial y_1 \partial y_2}{\partial x_1 \partial x_2} \frac{\partial y_1 \partial y_2}{\partial x_2 \partial x_1} = y_1' y_2' D$$

$$\ln|J| = \ln(y_1') + (y_2') + \ln(D)$$

where

$$D = \left(\frac{\partial u_1 \partial u_2}{\partial x_1 \partial x_2} - \frac{\partial u_1 \partial u_2}{\partial x_x \partial x_1}\right) = w_1 w_2, \quad y_1' = \frac{\partial y_1}{\partial u_1}, \text{ and } y_2' = \frac{\partial y_2}{\partial u_2} \tag{1}$$

The adaptation rule for each parameter of the network can now be derived by computing the gradient ln|J| with respect to that parameter. For $w_1$, the following is obtained

$$\Delta w_1 \propto \frac{\partial |J|}{\partial w_1} = \frac{1 \partial y_1'}{y_1' \partial w_1} + \frac{1 \partial y_2'}{y_2' \partial w_1} + \frac{1 \partial D}{D \partial w_1} \tag{2}$$

For the logistic function. Thus, for the partial derivatives:

$$\frac{\partial y_1'}{w_1} = \frac{\partial y_1' \partial y_1 \partial u_1}{\partial y_1 \partial u_1 \partial w_1} = (1 - 2y_1)y_1' x_1, \tag{3}$$

$$\frac{\partial y_2'}{\partial w_1} = \frac{\partial y_2' \partial y_2 \partial u_2}{\partial y_2 \partial u_2 \partial w_1} = (1 - 2y_2)y_2' 0 = 0, $$

$$\frac{\partial D}{\partial w_1} = \frac{\partial(w_1 w_2)}{\partial w_1} = W_2$$

The adaptation rule for $w_1$ becomes the following from equation (2) above (similarly for $w_2$):

$$\Delta w_1 \propto (1-2y_1)x_1 + 1/w_1, \tag{4}$$

$$\Delta w_2 \propto (1-2y_2)x_2 + 1/w_2$$

The bias adaptation is. The role of these weights and biases is to scale and to shift the data so as to maximize the information passed through the sigmoid function g.

For $w_{12}$, $\Delta w_{0i} \propto -2y_i$ the partial derivatives are as follows:

$$\frac{\partial y_1'}{\partial w_{12}} = \frac{\partial y_1' \partial y_1 \partial u_1}{\partial y_1 \partial u_1 \partial w_{12}} = (1-2y_1)y_1' u_2 (t-d_{12}), \tag{5}$$

$$\frac{\partial y_2'}{\partial w_{12}} = \partial y_2' \partial y_2 \partial u_2 \frac{}{\partial y_2 \partial u_2 \partial w_{12}} = (1-2y_2)y_2' 0 = 0$$

$$\frac{\partial D}{\partial w_{12}} = \frac{\partial(w_1 w_2)}{\partial w12} = 0$$

Thus the adaptation for $w_{12}$ is the following (similarly for $w_{21}$)

$$\Delta w_{12} \propto (1-2y_1)u_2(t-d_{12}), \tag{6}$$

$$\Delta w_{21} \propto (1-2y_2)u_1(t-d21),$$

These rules decorrelate the present squashed output $y_i$ from the other source $u_j$ at delay $d_{ij}$, which is equivalent to separation. Note that in equations (5) and (6) the time indices of $u_1$ and $u_2$ are given in parentheses, whereas for all other variables the time is implicitly assumed to be t. All the partial derivatives starting from equation (1) are also taken at time instance t, which is why it is not necessary to expand the cross partial derivatives recursively backwards into time.

The partial derivatives for the delay $d_{12}$ are:

$$\frac{\partial y_1'}{\partial d_{12}} = \frac{\partial y1}{\partial y_1}\frac{\partial y_1}{\partial u_1}\frac{\partial u_1}{\partial d_{12}} = (1-2y_1)y_1' w_{12}(-u_2'(t-d_{12})), \tag{7}$$

$$\partial y_2' \overline{\frac{}{\partial d_{12}}} = \frac{\partial y_2'}{\partial y_2}\frac{\partial y_2}{\partial u_2}\frac{\partial u_2}{\partial d_{12}} = (1-2y_2)y_2' = 0,$$

$$\partial D \overline{\frac{}{\partial w_{12}}} = \frac{\partial(w_1 w_2)}{}\partial w_{12} = 0,$$

which takes advantage of the fact that

$$\frac{\partial u_2(t-d_{12})}{\partial d_{12}} = d\overline{\frac{}{dt}}(-u_2(t-d_{12}))=-u_2'(t-d12)$$

The adaptation rules for the delays become the following (again, only the time indices for $u_i$ are explicitly written):

$$\Delta d_{12} \propto -(1-2y_1)w_{12}u2'(t-d_{12}), \tag{8}$$

$$\Delta d_{21} \propto -(1-2y_2)w_{21}u_1'(t-d_{21}),$$

It will be recognized that every adaptation rule is local, that is, to adapt a weight or a delay in a branch of the network, only the data coming in or going out of the branch are needed. Generalization to N mixtures can thus be done simply by substituting other indices for 1 and 2 in equations (6) and (8) and summing such terms.

While adaptive delays suffice for some applications, for most radio signals they are not enough. The radio environment (e.g. surrounding buildings) imposes a different impulse response between each transmitter and receiver unit. Moreover, the receiver units may have different characteristics, or at least their frequency response may differ for signals in different directions. To overcome these disadvantages, the blind source separation system 740 of FIG. 11 is utilized.

As can be seen by referring to FIG. 11, a simplified block/schematic diagram of another blind source separation system 740 is illustrated. The system 740 receives mixed signals $x_1$ and $x_2$ from two transmitters at inputs of adaptive filters 742 and 743, respectively. Within these filters, the mixed signal $x_1$ is essentially multiplied by a series of different weights associated with a series of different delays and a summation is carried out in adaptive filter 742 to produce a product signal that is applied to a summation circuit 743. Also, the mixed signal $x_2$ is essentially multiplied by a series of different weights associated with a series of different delays and a summation is carried out in adaptive filter 743 to produce a product signal that is applied to a summation circuit 744. Further, as explained previously, bias weights $w_{01}$ and $w_{02}$ are also applied to summation circuits 744 and 745, respectively, although in some special instances these signals may be ignored or built into the other components.

The output signals of the summation circuits 744 and 745 are approximation signals $u_1$ and $u_2$, respectively, which

are utilized to generate filtered feedback signals that are then applied to summation circuits 744 and 745, respectively. In this specific embodiment, a first filtered feedback signal is generated by passing the approximation signal $u_2$ through another adaptive filter 746 where $u_2$ is essentially multiplied by a series of different weights associated with a series of different delays and a summation is carried out in adaptive filter 746 to produce a first filtered feedback signal that is applied to the summation circuit 744. Also, a second filtered feedback signal is generated by passing the approximation signal $u_1$ through another adaptive filter 747 where $u_1$ is essentially multiplied by a series of different weights associated with a series of different delays and a summation is carried out in adaptive filter 747 to produce the second filtered feedback signal that is applied to the summation circuit 745.

The approximation signals $u_1$ and $u_2$ are also applied to output circuits 748 and 749 which pass $u_1$ and $u_2$ through nonlinearities to produce output signals $y_1$ and $y_2$. The output signals are utilized in an adjustment circuit 750 to adjust the adaptive filters 742, 743, 746 and 747, to maximize entropy of the output signals $y_1$ and $y_2$ and, thereby, recover the first transmitter signal as the $u_1$ and the second transmitter signal as the $u_2$.

The operation of the system in FIG. 11 is explained by modeling it as the convolved mixtures set forth below. For simplicity, two signals in the z-transform domain are shown, but it will be understood that this can again be generalized to any number of signals.

$$X_1(z) = A_{11}(z)S_1(z) + A_{12}(z)S_2(z), \qquad (9)$$

$$X_2(z) = A_{22}(z)S_2(z) + A_{21}(z)S_1(z),$$

where $A_{ij}$ are the z-transforms of any kind of filters and $S_1$ and $S_2$ are the sources. Solving for the sources S in terms of the mixture signals $X_1$ and $X_2$:

$$S_1(z) = (A_{22}(z)X_1(z) - A_{21}(z)X_2(z))/G(z), \qquad (10)$$

$$S_2(z) = (A_{11}(z)X_2(z) - A_{12}(z)X_1(z))/G(z).$$

By G(z) is denoted as $A_{12}(z)A_{21}(z) - A_{11}(z)A_{22}(z)$. This gives a feedforward architecture for separation. However, the simple feedforward architecture by itself does not result in the solution of equation (10). The whitening effect is avoided by using blind source separation system 740 of FIG. 11.

In the system 740, outputs before nonlinearities (approximation signals) are:

$$U_1(z) = W_{11}(z)X_1(z) + W_{12}(z)U_2(z), \qquad (11)$$

$$U_2(z) = W_{22}(z)X_2(z) + W_{21}(z)U_1(z),$$

Using equations (9) and (11) and designating adaptive filter 742 as $W_{11}$, adaptive filter 743 as $W_{22}$, adaptive filter 746 as $W_{12}$, and adaptive filter 747 as $W_{21}$, a solution for perfect separation and deconvolution becomes:

$$W_{11}(z) = A_{11}(z)^{-1}, W_{12}(z) = A_{12}(z)A_{11}(z)^{-1},$$

$$W_{22}(z) = A_{22}(z)^{-1}, W_{21}(z) = A_{21}(z)A_{22}(z)^{-1},$$

By forcing $W_{11} = W_{22} = 1$, the entropy at the output can be maximized without whitening the sources. In this case $W_{11}$ and $W_{22}$ have the following solutions:

$$W_{11}(z) = 1, W_{12}(z) = {}^-A_{12}(z)A_{22}(z)^{-1},$$

$$W_{22}(z) = 1, W_{21}(z) = {}^-A_{21}(z)A_{11}(z)^{-1}.$$

The adaptation equations for the blind source separation system 740 of FIG. 11 are derived below using, for simplicity, only two sources. In the following equations, $w_{iki}$ denotes the weight associated with delay k from mixture i to approximation signal i, and $W_{ikj}$ denotes the weight associated with delay k from approximation signal j to approximation signal i. Assuming FIR filters for $W_{ij}$, in the time domain the network carries out the following:

$$u_1(t) = \sum_{k=0}^{L_{11}} w_{1k1} xs(t\text{-}k) + \sum_{k=1}^{L_{12}} w_{1k2} u_2(t\text{-}k)$$

$$u_2(t) = \sum_{k=0}^{L_{11}} w_{2k2} x_2(t\text{-}k) + \sum_{k=1}^{L_{21}} w_{2k1} u1(t\text{-}k)$$

For the Jacobian,

$$\ln|J| = 1\,n(y_1') + \ln(y_2') + \ln D)$$
$$= \ln(y_1') + \ln(y_2') + \ln(w_{101} w202)$$

There will now be three different cases: zero delay weights in direct filters, other weights in direct filters, and weights in feedback cross-filters. Following the steps in previous derivation for all these cases:

$$\Delta w_{i0i} \propto (1\text{-}2y_i) x_i + 1/wi0i,$$

$$\Delta w_{iki} \propto (1\text{-}2y_i) xi\,(t - k),$$

$$\Delta w_{ikj} \propto (1\text{-}2y_i) uj\,(t\text{-}k).$$

The zero delay weights again scale the data to maximize the information passed through the sigmoid, other weights in the direct branches of the network decorrelate each output from the corresponding input mixture (whitening), and the weights of the feedback branches decorrelate each output $y_i$ from all of the other sources (approximation signals $u_j$) at every time instant within the scope of the filters t - k (separation).

Accordingly, the apparatus, methods and systems in accordance with the present disclosure enables a plurality of transmitters to transmit signals simultaneously over the same RF channel to a plurality of receiver devices. The receiver devices each receive a different mixture of the signals from each of the transmitters. The mixtures received by the receiver devices are processed preferably utilizing blind source separation techniques to recover the original signals of the transmitters.

The apparatus, methods and systems provide for a considerable saving in the amount of RF spectrum used and can multiplicitly increase the existing RF spectrum capacity without allocating additional RF channels, adding new cell installations, or subdividing existing cells. In addition, adjacent site co-channel interference can be reduced by permitting complete or partial overlapping of the center frequency of adjacent signals of the RF channels. The channels may have a frequency of about 10 kHz to 10 MHz. It is also contemplated that the channels may have a frequency greater than 10 MHz.

Additional advantages and modifications will readily occur to those skilled in the art. The invention, in its broader aspects, is therefore not limited to the specific details, representative apparatus, and illustrative examples shown and described. Various modifications and variations can be made to the present invention without varying from the scope or spirit of the invention, and it is intended that the present invention cover the modifications and variations provided they come within the scope of the appended claims and their equivalents.

## Claims

1. A cellular communication system for providing service to a plurality of subscriber units comprising:

a first base station having a first reception coverage area, the first base station including a receiver antenna and a receiver, the first base station adapted to receive information over a plurality of channels from the plurality of subscriber units;
a second base station having a second reception coverage area, the second base station having a receiver antenna and a receiver, the second base station adapted to receive information over a plurality of channels from the plurality of subscriber units;
the first reception coverage area of the first base station overlaps, at least in part, the second reception coverage area of the second base station to define a common reception area;
the receiver of the first base station receiving a first mixture of signals from the plurality of the subscriber units over a first channel;
the receiver of the second base station receiving a second mixture of signals from the plurality of subscriber units over the first channel; and
a processing unit recovering the original signals from the plurality of subscriber units from the first and second mixtures of signals when the subscriber units are in the common reception area.

2. A wireless communication system for providing service to at least two subscriber units comprising:

a first receiver device having a first reception coverage area and a receiver antenna coupled to a receiver, the first receiver device receiving a first mixture of signals from the at least two subscriber units over a first RF channel;

a second receiver device having a second reception area and a receiver antenna coupled to a receiver, the second receiver device receiving a second mixture of signals from the at least two mobile subscribers over the first RF channel;

the second coverage area of the second receiver device overlapping the first coverage area of the first receiver device to define a common reception region, the at least two subscriber units being located in the common reception region; and

a processing unit coupled to the second receiver device and the first receiver device for receiving the first mixture and second mixture, the processing unit recovering the original signals of the at least two subscriber units.

3. A communication system comprising:

a first transmitter transmitting a first signal at a first assigned frequency;

a second transmitter transmitting a second signal at the first assigned frequency;

a first receiver device receiving a first mixture of the first signal from the first transmitter and the second signal from the second transmitter;

a second receiver device receiving a second mixture of the first signal from the first transmitter and the second signal from the second transmitter; and

a processing unit in communication with the first and second receiver devices and configured to receive the first mixture and the second mixture, wherein the processing unit including circuitry to recover the first transmitted signal and the second transmitted signal.

4. A method of recovering signals comprising the steps of:

assigning a first channel also to a first transmitter;

assigning the first channel also to a second transmitter;

receiving a first mixture of signals from the first and second transmitter at a first receiving device;

receiving a second mixture of signals from the first and second transmitters at a second receiving device; and

processing the first and second mixed signals to recover the original signal of the first transmitter and the original signal of the second transmitter.

5. The system of claim 2 wherein the subscriber units are simultaneously transmitting signals over partially overlapping frequency channels.

6. The system of claim 2 or 3 or 4 wherein at least one of the receiver devices comprise one of a base transceiver station, a mobile unit, an element of a satellite, a subscriber unit, a base station controller, a base station system, and a receiver unit.

7. The system of claim 2 wherein the wireless communication system comprises one of a data, video, radio, and voice system.

8. The system of claim 3 wherein the signals are one of a data signal, a video signal, a radio signal, a television signal, an analog signal, and a digital signal.

9. The system of claim 1 or 2 wherein the processing unit includes a separation unit.

10. The system of claim 2 or 3 wherein the separation unit includes a blind source separation unit.

FIG. 1

EP 0 874 474 A2

FIG. 2

**FIG. 3**

330

338

333

375 — TRANSMITTER

383

371 — SWITCH

POSITION / ROUTER — 373

381

365

TO OTHER RECEIVER UNITS

363n

363a
363b

12 n

PROCESSOR 340

334a — RECEIVER 1

334b — RECEIVER 2

334n — RECEIVER n

337 — COMMAND RECEIVER

337a

337b

337n

336a

336b

336n

339

FIG. 4

470

480

492

496

490~

494

460

FIG. 5

600

620a

630a

X

Y

627

620

612~ ~614

630

RECEIVER UNIT

610

RECEIVER UNIT

FIG. 7

*FIG. 6*

**FIG. 8**

$MIXTURE1 = a_{11} s_1 + a_{12} s_2$

$MIXTURE2 = a_{21} s_1 + a_{22} s_2$

**700**    **FIG. 9**

737 — ADJUST WEIGHTS AND DELAYS ← MAXIMIZE ENTROPY

735 — ∫   ∫ — 736

$x_1$  $w_1$  ⊕  732  →  $y_1$

$w_{01}$

$w_{12}$

$d_{21}$

$w_{21}$

SEPARATED SOURCES

$d_{12}$

$w_{02}$

$x_2$  $w_2$  ⊕  733  →  $y_2$

**FIG. 10**  730

750 — ADJUST FILTER COEFFICIENTS ← MAXIMIZE ENTROPY

748 — ∫   ∫ — 749

742  744

$x_1$ → $w_1$ ⊕ → $U_1$

$w_{01}$

747

$w_{21}$

SEPARATED SOURCES

746

$w_{12}$

$w_{02}$

$x_2$ → $w_2$ ⊕ → $U_2$

743  745

**FIG. 11**  740